# EUROPÄISCHE PATENTSCHRIFT

(11) **EP 3 714 191 B1**
(45) Veröffentlichungstag und Bekanntmachung des Hinweises auf die Patenterteilung: **22.09.2021**
(21) Anmeldenummer: 18796867.2
(22) Anmeldetag: 25.10.2018
(51) Int. Cl.: F16K 27/02, F16K 31/06

(54) **HÜLSE FÜR EIN FLUIDVENTIL UND AXIAL DURCHSTRÖMBARES FLUIDVENTIL**
SLEEVE FOR A FLUID VALVE AND FLUID VALVE THROUGH WHICH FLUID CAN FLOW AXIALLY
DOUILLE POUR UNE SOUPAPE À FLUIDE ET SOUPAPE À FLUIDE POUVANT ÊTRE TRAVERSÉE AXIALEMENT

(30) Priorität: 23.11.2017 DE 102017127726
(43) Veröffentlichungstag der Anmeldung: 30.09.2020
(73) Patentinhaber: Pierburg GmbH, 41460 Neuss (DE)
(72) Erfinder: SADIKU, Besart, 41460 Neuss (DE)
(74) Vertreter: terpatent Patentanwälte ter Smitten Eberlein-Van Hoof Rütten Daubert
(86) Internationale Anmeldenummer: PCT/EP2018/079287
(87) Internationale Veröffentlichungsnummer: WO 2019/101473

(56) Entgegenhaltungen:
- EP-A1- 0 066 601
- WO-A1-96/00348
- WO-A1-2018/007169
- DE-A1- 19 837 694
- FR-A1- 2 671 597
- GB-A- 2 515 126
- US-A- 4 216 938
- US-A1- 2004 255 916

## Beschreibung

Die Erfindung betrifft ein axial durchströmbares Fluidventil mit einem Elektromagneten, der einen Kern und eine durchströmbare Ankereinheit sowie eine Spule und magnetische Rückschlusselemente aufweist, einem Gehäuse, in dem der Elektromagnet angeordnet ist, einem Einlassstutzen, der an einem ersten axialen Ende des Gehäuses vorgesehen ist, einem Auslassstutzen, der an einem entgegengesetzten axialen Ende des Gehäuses vorgesehen ist, einer Auflagefläche an einem axialen Endabschnitt der Ankereinheit, welche mit einem Ventilsitz zusammenwirkt, wobei das Gehäuse und der Auslassstutzen als einstückiges Spritzgussteil ausgebildet sind.

Derartige Fluidventile werden auch als Koaxialventile, Hydraulikventile oder Kühlwasserabsperrventile bezeichnet. Diese Fluidventile dienen beispielsweise zur Abschaltung oder Freigabe eines Kühlmittelweges in einem Kraftfahrzeug, um einerseits eine möglichst schnelle Aufheizung der durchströmbaren Aggregate sicherzustellen und andererseits deren Überhitzung zu verhindern. Um eine solche Applikation möglichst kostengünstig ausführen zu können, muss einerseits eine möglichst druckverlustarme Durchströmung des Fluidventils sichergestellt werden, um die aufzubringende Pumpleistung möglichst gering zu halten und andererseits den Stromverbrauch des Fluidventils, welches üblicherweise elektromagnetisch betätigt wird, möglichst gering gehalten werden, um keine zusätzliche Energie zu verbrauchen. Aus diesen Gründen werden Koaxialventile verwendet, welche trotz eines kleinen benötigten Bauraums und geringer Herstellkosten aufgrund reduzierter Strömungsumlenkungen einen geringen Druckverlust erzeugen und gleichzeitig einen ausreichend großen Durchströmungsquerschnitt zur Verfügung stellen. Durch die geringen Baugrößen und daraus folgend kleinen und leichten beweglichen Teilen, Ist auch der Stromverbrauch dieser Fluidventile relativ gering.

Ein derartiges Koaxialventil ist beispielsweise aus der EP 1 255 066 A2 bekannt. Dieses Ventil weist ein als Schließkörper dienendes Rohr auf, welches radial innerhalb eines Ankers des Elektromagneten befestigt ist und sich durch den Kern zum entgegengesetzten axialen Ende des Elektromagneten erstreckt. Ankerseitig ist am Gehäuse des Elektromagneten ein Auslassanschlussstutzen befestigt, in dem ein Umströmungskörper mit Ventilsitz ausgebildet ist, auf den das Rohr zum Verschluss des Strömungsquerschnitts aufsetzbar ist. Das Rohr umgebend ist eine Druckfeder angeordnet, welche in zueinander weisenden am Innenumfang ausgebildeten Ausnehmungen des Ankers und des Kerns angeordnet ist und das Rohr über den Anker in seine Schließstellung belastet. Der Anker wird bei seiner Bewegung in einer Hülse geführt. Dabei bewegt sich das Rohr im Innern des Kerns.

Dieses bekannte Ventil weist jedoch einen montagetechnisch aufwendigen Aufbau auf. Das Ventil besitzt hierbei eine Vielzahl von Einzelteilen, die eine Vormontage erschweren. Zudem besteht die Gefahr durch einen Winkelversatz im Gehäuse eine gewünschte Koaxialität von Gehäuse, Ventilsitz, Anker und Kern nicht gewährleisten zu können.

Darüber hinaus ist es aus der US 2004/255916 A1, der US 4,216,938 A oder der FR 2 671 597 A1 bekannt, das Gehäuse und den Auslass- oder Einlassstutzen als einstückiges Bauteil her zu stellen. Aber auch diese Fluidventile weisen den Nachteil einer komplizierten Montage, insbesondere hinsichtlich einer Vormontage und benötigten Koaxialität der Bauteile, auf.

Das Dokument DE 198 37 694 A1 offenbart ebenfalls ein Fluidventil aus dem Stand der Technik.

Es stellt sich daher die Aufgabe, ein axial durchströmbares Fluidventil bereit zu stellen, das auf einfache und kostengünstige Welse die oben genannten Nachteile vermeidet.

Diese Aufgabe wird durch eine Hülse für ein Fluidventil mit den Merkmalen des Hauptanspruchs 1 gelöst.

Dadurch, dass eine Hülse mit einem Hülsenkörper, der einen ersten zylindrischen Abschnitt aufweist, in dem zumindest ein Kern und ein Anker als Teile eines herzustellenden Elektromagneten angeordnet sind, vorgesehen ist, wobei der Hülsenkörper beidseitig offen ausgeführt ist, wobei ein erstes Ende des Hülsenkörpers eine Einschnürung mit einem sich anschließenden zweiten zylindrischen Abschnitt aufweist und ein zweites Ende eine Aufweitung mit einem sich anschließenden dritten zylindrischen Abschnitt aufweist, wobei auf dem zweiten und dritten zylindrischen Abschnitt Dichtorgane vorgesehen sind. Hierdurch ist es auf besondere Art und Weise möglich die Ankereinheit und den Kern als Vorbaugruppe in der Hülse zu integrieren. Auch ist auf eine besonders einfache Art und Weise die Koaxialität der Bauteile zueinander gewährleistet.

In besonders vorteilhafter Weise sind die Dichtorgane als O-Ringe ausgeführt, die im Presssitz auf dem zweiten und dritten zylindrischen Abschnitt vorgesehen sind.

In vorteilhafter Weise sind die Auflagefläche und damit der Ventilsitz an einem Umströmungskörper ausgebildet.

In einer vorteilhaften Ausführungsform kann der Einlassstutzen einen ersten ringförmigen Vorsprung aufweisen, der ein Ringorgan und einen zweiten ringförmigen Vorsprung des Gehäuses unter Zwischenlage eines Dichtorgans umgreift.

Der Umströmungskörper kann über Stege mit dem Ringorgan verbunden sein, wobei das Ringorgan einen dritten ringförmigen Vorsprung aufweist, der mit einer Außenseite auf eine Innenseite des dritten zylindrischen Abschnitts des Hülsenkörpers angreift. Hierdurch ist auf einfache Weise die Koaxialität des Fluidventils gewährleistet. An der Innenseite des ersten ringförmigen Vorsprungs kann ein Dichtring für den Anker vorgesehen sein, derart, dass der Dichtring in axialer Richtung durch den Kern und einen radialen inneren Bereich des Ringorgans fixiert ist,

Vorzugsweise ist innerhalb der Hülse zwischen dem Anker und dem Kern ein Raum angeordnet, der mit Fluid gefüllt ist und in dem eine Druckfeder angeordnet ist. Entsprechend können die Dichtungen vollständig zwischen sich nicht bewegenden Teilen angeordnet werden, um die Spule vor Fluideintritt zu schützen. Zusätzlich liegt beim Schalten immer ein Druckausgleich vor, durch den die benötigten Schaltkräfte verringert werden.

Die Druckfeder umgibt vorzugsweise das Rohr unmittelbar radial und ist im Raum zwischen dem Anker und dem Kern angeordnet. Durch eine derartige Anordnung wird ein besonders bauraum-optimiertes Fluidventil bereit gestellt.

Es wird somit ein axial durchströmbares Fluidventil, insbesondere Kühlmittelabsperrventil für eine Verbrennungskraftmaschine geschaffen, das kostengünstig und einfach herzustellen ist.

Ein Ausführungsbeispiel eines erfindungsgemäßen axial durchströmbaren Fluidventils ist in der Zeichnung dargestellt und wird im Folgenden anhand seiner Verwendung als Kühlwasserabsperrventil beschrieben.
Figur 1 zeigt eine Seitenansicht eines erfindungsgemäßen Fluidventils in stromlos offener Version in geschnittener Darstellung, und
Figur 2 zeigt eine Seitenansicht einer Hülse des Fluidventils aus Figur 1 in geschnittener Darstellung.

Ein erfindungsgemäßes, axial durchströmbares Fluidventil 2, welches für Kühlkreisläufe von Verbrennungsmotoren, Hybrid- oder Elektrofahrzeugen verwendet werden kann, weist einen Elektromagneten 10 auf, der in einem Gehäuse 12 angeordnet ist, Der Elektromagnet 10 besteht aus einer Spule 14, die auf einen Spulenträger 16 gewickelt ist, sowie Rückschlusselementen 18, 20, 22, welche durch zwei an den axialen Enden des Spulenträgers 16 angeordnete Rückschlussbleche 18, 20 sowie ein die Spule 14 umgebendes Joch 22 gebildet werden. Im Innern des Spulenträgers 16 beziehungsweise des Gehäuses 12 ist eine Hülse 24 mit einem Hülsenkörper 25 befestigt, in deren Innern ein Kern 26 des Elektromagneten 10 befestigt ist und in der ein Anker 28 des Elektromagneten 10 gleitbeweglich angeordnet ist. Zur Bestromung der Spule 14 ist am Gehäuse 12 ein Stecker 30 ausgebildet, dessen elektrische Kontaktfahnen 32 sich durch das Gehäuse 12 zur Spule 14 erstrecken.

Der Kern 26 weist eine radial innere, zur Hülse 24 offene, umfängliche Ausnehmung 34 auf, welche sich vom Anker 28 aus betrachtet bis an eine Anlagefläche 36 erstreckt, gegen die eine Druckfeder 38 anliegt, welche unter Vorspannung an ihrem entgegengesetzten Ende gegen einen ringförmigen Vorsprung 40 des Ankers 28 anliegt und die Hülse 24 in diesem Bereich umgibt. Der radial innere ringförmige Vorsprung 40 am axialen Ende 41 des Ankers 28 ist korrespondierend zu einem sich von der Ausnehmung 34 des Kerns 26 im radial äußeren Bereich erstreckenden konischen Vorsprung 42 ausgebildet, wodurch der Anker 28 bei Bestromung der Spule 14 teilweise in den Kern 26 eintauchen kann. Um ein Anschlagen des Ankers 28 am Kern 26 und ein daraus folgendes Haften des Ankers 28 am Kern 26 zu verhindern, ist am Ende des Vorsprungs 40 des Ankers 28 eine umlaufende Radialnut 44 ausgebildet, in der ein nicht magnetisierbarer Anschlagring 46 angeordnet ist, gegen den der Kern 26 im bestromten Zustand anliegt.

Im radial inneren Bereich des ringförmigen Vorsprungs 40 des Ankers 28 ist dieser mit einem Rohr 48 verbunden, welches sich durch den Kern 26 erstreckt und mit dem Anker 28 eine bewegbare und durchströmbare Ankereinheit 49 bildet. Ein axiales Ende des Rohres 48, welches zum Anker 28 weist, ragt zur Befestigung am Anker 28 in eine entsprechende ringförmige Aufnahme 47, die am Innenumfang des Ankers 28 im Bereich des Vorsprungs 40 ausgebildet ist und in die das Ende des Rohres 48 beispielsweise eingepresst wird.

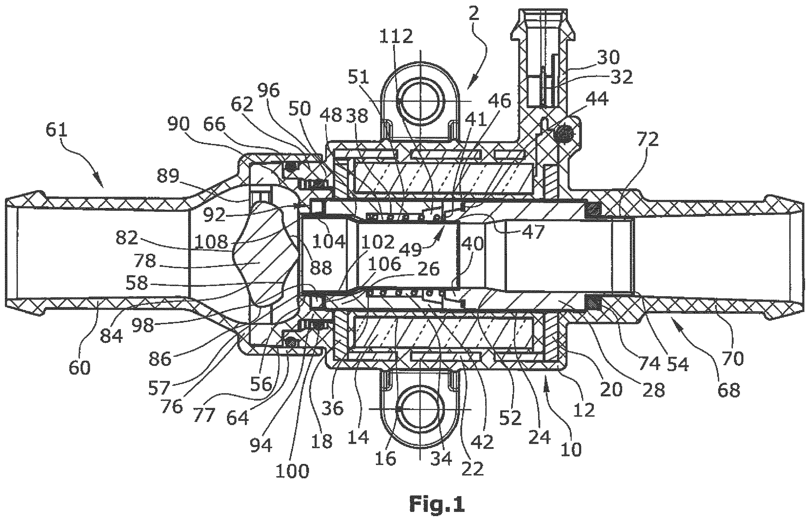

Die Ankereinheit 49 erstreckt sich von einem Einlassstutzen 60 aus betrachtet zunächst zylindrisch, woraufhin eine kegelabschnittsförmige Einschnürung 50 im Rohr 48 folgt, an die sich ein zylindrischer Abschnitt 51 verringerten Durchmessers anschließt, in dem auch der Übergang zwischen dem Rohr 48 und dem Anker 28 ausgebildet ist. Im weiteren Verlauf ist an der Ankereinheit 49 eine kegelabschnittsförmige, umfängliche Erweiterung 52 ausgebildet, von deren Ende aus sich die Ankereinheit 49 wieder mit dem Durchmesser zylindrisch fortsetzt, der auch im Eingangsbereich ausgebildet ist. Bei der in Figur 1 dargestellten Ausführung handelt es sich um die Bauform eines stromlos offenen Fluidventils 2. Bei einem stromlos geschlossenen Fluidventil 2 ist die Ankereinheit 49 identisch, jedoch ist aufgrund der vertauschten Fließrichtung die Einschnürung 50 im Anker 28 und die Erweiterung 52 im Rohr 48 ausgebildet ist. Die Druckfeder 38 umgibt jeweils den zylindrischen Abschnitt 51 verringerten Durchmesser, der am Rohr 48 ausgebildet ist, so dass dieser als Führung der Druckfeder 38 dient.

Voneinander weg weisende Endabschnitte 54, 56 des Rohres 48 und des Ankers 28 weisen in den vorliegenden Ausführungsbeispielen gleiche Innendurchmesser auf, welche in einer ringförmigen dünnen Auflagefläche 57 enden, die als Schließfläche für einen korrespondierenden Ventilsitz 58 dienen kann, welcher in dem Einlassstutzen 60 angeordnet ist, der sich an einem ersten axialen Ende 61 befindet und im vorliegenden Ausführungsbeispiel gegenüberliegend zum Endabschnitt 54 des Ankers 28 angeordnet Ist. In einer stromlos geschlossenen Ausführung kann der Ventilsitz 58 auch gegenüberliegend zum Endabschnitt 56 des Rohres 48 angeordnet sein. Mit einem ersten ringförmigen Vorsprung 64 des Einlassstutzens 60 korrespondiert ein zweiter ringförmiger Vorsprung 62 das Gehäuse 12. Der Vorsprung 64 umschließt hierbei den Vorsprung 62 unter Zwischenlage eines Dichtorgans in Form eines O-Ringes 66 und kann beispielsweise durch Laserschweißen befestigt werden.

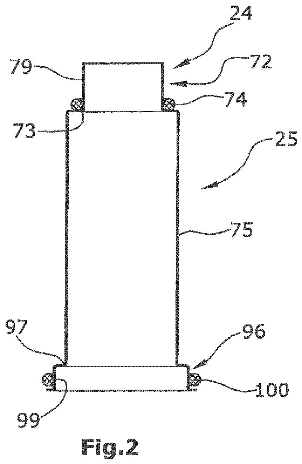

Das Gehäuse 12 des Fluidventils weist an einem zweiten axialen Ende 68 einen einstückig mit dem Gehäuse 12 ausgebildeten Auslassstutzen 70 auf. Dieser Auslassstutzen 70 umschließt hierbei ein erstes axiales Ende 72 des Hülsenkörpers 25 unter Zwischenschaltung eines O-Ringes 74, wobei dieses axiale Ende 72 gegenüber einem ersten zylindrischen Abschnitt 75, in dem die Ankereinheit 49 gelagert ist, einen zweiten zylindrischen Abschnitt 79 mit einem kleineren Durchmesser aufweist (siehe hierzu insbesondere Figur 2) und über eine Einschnürung 73 mit diesem verbunden ist.

Der Einlassstutzen 60 weist einen Absatz 76 auf, über den ein Ringorgan 77 eines Umströmungskörpers 78 bei der Befestigung des Einlassstutzens 60 gegen den ringförmigen Vorsprung 62 des Gehäuses 12 beim Ausführungsbeispiel geklemmt wird, so dass das Ringorgan 77, das gleichzeitig den Ventilsitz 58 bildet oder an dem ein entsprechender Ventilsitz 58 ausgebildet werden kann, in seiner Lage fixiert ist.

Der Umströmungskörper 78 ist achssymmetrisch ausgebildet und weist eine mittlere konvexe Anströmfläche 82 auf, an die sich weiter radial außen liegend eine konkave Anströmfläche 84 anschließt. Diese geht über einen Radius in eine zunächst im radial äußeren Bereich konvexe Abströmfläche 86 über, von der aus sich nach radial außen vier Stege 89 erstrecken, über die der Umströmungsbereich des Umströmungskörpers 78 am Ringorgan 77 befestigt Ist und zwischen denen der Fluidstrom von der Anströmseite zur Abströmseite und damit in das Innere der Ankereinheit 49 gelangen kann. An die konvexe Abströmfläche 86 schließt sich ein planer Bereich an, der den Ventilsitz 58 bildet und von dem aus sich eine konkave Abströmfläche 88 bis zur Mittelachse des Ringorgans 77 erstreckt.

Das Ringorgan 77 weist eine radial innere Strömungsleitfläche 90 auf, die als Anströmfläche des Fluids dient und sich konkav nach radial innen erstreckt. Im Übergangsbereich zwischen dem konkaven Teil und einem sich radial erstreckenden Teil 92 der Strömungsleitfläche 90 erstreckt sich von der axial gegenüberliegenden Seite des Ringorgans 77 ein dritter ringförmiger Vorsprung 94 in axialer Richtung zum Elektromagneten 10.

Wie insbesondere aus Figur 2 hervorgehet weist ein zweites axiales Ende 96 des Hülsenkörpers 25 eine stufenförmigen Aufweitung 97 auf, die in einen dritten zylindrischen Abschnitt 99 übergeht. Dieser dritte zylindrische Abschnitt 99 umgibt den ringförmigen Vorsprung 94 radial. Der ringförmige Vorsprung 94 seinerseits liegt radial innen gegen ein Ende des Kerns 26 an und einen axial gegen den Kern 26 anliegenden Dichtring 98, der als Lippendichtring ausgebildet ist, an. Im radial äußeren Bereich wird der dritte zylindrische Abschnitt 99 des Hülsenkörpers 25 von einem Dichtorgan 100 umgeben, das im radial äußeren Bereich gegen den Vorsprung 62 des Gehäuses 12 anliegt.

Der Lippendichtring 98 liegt mit seinem sich radial erstreckenden Lippenträger 102 gegen das axiale Ende des Kerns 26 an. Vom Lippenträger 102 aus erstrecken sich an den radialen Enden zwei Dichtlippen 104, 106, wovon die radial innere Dichtlippe 104 von radial außen gegen das Rohr 48 anliegt und die radial äußere Dichtlippe 106 gegen den Vorsprung 94 des Stützrings 80 anliegt. Die Lippenenden 108 sind gegenüberliegend zum radial inneren Bereich 92 des Ringorgans 77 orientiert.

Dieser Aufbau führt dazu, dass ein Raum 112 zwischen dem axialen Ende 41 des Ankers 28 und dem Kern 26, in dem auch die Druckfeder 38 angeordnet ist, immer mit einem Fluid gefüllt ist, welches bei geschlossenem Ventil einen Druck aufweist, der dem Druck am Auslassstutzen 70 entspricht, da durch den Lippendichtring 98 ein Einströmen des Fluids vom Einlassstutzen 60 entlang des axialen Endabschnitts 56 des Rohres 48 in diesen Raum 112 verhindert wird, da die Dichtlippen 104, 106 durch den an dieser Seite höheren Druck radial gegen die radial inneren und äußeren Bauteile gedrückt werden, gegen die sie anliegen,

Das Fluid gelangt entsprechend lediglich vom Auslassstutzen 70 entlang des Spaltes zwischen der Hülse 24 und dem Anker 28 in den Raum 112, der entsprechend mit Fluid gefüllt ist, während durch die Dichtung 100 sowie die Dichtung 74 ein Fluidstrom zum Elektromagneten 10 im Außenbereich der Hülse 24 zuverlässig verhindert wird.

Da sich die beweglichen Elemente Anker 28 und Rohr 48 vollständig auf der Seite befinden, an der der Auslassdruck herrscht, kann dieses Fluidventil mit geringen elektromagnetischen Kräften geschaltet werden, da ein Druckausgleich an den beweglichen Teilen vorliegt, so dass lediglich die Rückstellkraft der Druckfeder 38 überwunden werden muss, um das Fluidventil zu schalten. Sobald das Ventil geöffnet wird, breitet sich der Druck über die Spalte auch in den Raum 112 in kürzester Zeit aus, wodurch ein Druckausgleich an den bewegten Teilen des Fluldventils entsteht, so dass zum Schalten lediglich die vorhandene Reibung sowie die Federkraft überwunden werden müssen.

Aus alledem folgt, dass das erfindungsgemäße Fluidventil 2 besonders einfach aufgebaut und zu montieren ist.

## Patentansprüche

1. Axial durchströmbares Fluidventil mit
einem Elektromagneten (10), der einen Kern (26) und eine durchströmbare Ankereinheit (49) sowie eine Spule (14) und magnetische Rückschlusselemente (18, 20, 22) aufweist,
einem Gehäuse (12), in dem der Elektromagnet (10) angeordnet ist, einem Einlassstutzen (60), der an einem ersten axialen Ende des Gehäuses (12) vorgesehen ist,
einem Auslassstutzen (70), der an einem entgegengesetzten axialen Ende des Gehäuses (12) vorgesehen ist,
einer Auflagefläche (57) an einem axialen Endabschnitt (54, 56) der Ankereinheit (49), welche mit einem Ventilsitz (58) zusammenwirkt, wobei
das Gehäuse (12) und der Auslassstutzen (70) als einstückiges Spritzgussteil ausgebildet sind,
**dadurch gekennzeichnet, dass**
eine Hülse mit einem Hülsenkörper (25), der einen ersten zylindrischen Abschnitt (75) aufweist, in dem zumindest ein Kern (26) und ein Anker (28) als Teile eines herzustellenden Elektromagneten (10) angeordnet sind, vorgesehen ist, wobei der Hülsenkörper (25) beidseitig offen ausgeführt ist, wobei ein erstes Ende (72) des Hülsenkörpers (25) eine Einschnürung (73) mit einem sich anschließenden zweiten zylindrischen Abschnitt (79) aufweist und ein zweites Ende (96) eine Aufweitung (97) mit einem sich anschließenden dritten zylindrischen Abschnitt (99) aufweist, wobei auf dem zweiten und dritten zylindrischen Abschnitt (77, 99) Dichtorgane (74, 100) vorgesehen sind.

2. Axial durchströmbares Fluidventil nach Anspruch 1, **dadurch gekennzeichnet, dass** die Dichtorgane (74, 100) als O-Ringe ausgeführt sind, die im Presssitz auf dem zweiten und dritten zylindrischen Abschnitt (79, 99) vorgesehen sind.

3. Axial durchströmbares Fluidventil nach Anspruch 1 oder 2,
**dadurch gekennzeichnet, dass**
die Auflagefläche (57) und damit der Ventilsitz (58) an einem Umströmungskörper (78) ausgebildet sind.

4. Axial durchströmbares Fluidventil nach einem der Ansprüche 1 - 3,
**dadurch gekennzeichnet, dass**
der Einlassstutzen (60) einen ersten ringförmigen Vorsprung (64) aufweist, der ein Ringorgan (77) und einen zweiten ringförmigen Vorsprung (62) des Gehäuses (12) unter Zwischenlage eines Dichtorgans (66) umgreift.

5. Axial durchströmbares Fluidventil nach einem der Ansprüche 1 - 4,
**dadurch gekennzeichnet, dass**
der Umströmungskörper (78) über Stege (88) mit dem Ringorgan (77) verbunden ist, wobei das Ringorgan (77) einen dritten ringförmigen Vorsprung (94) aufweist, der mit einer Außenseite auf eine Innenseite des dritten zylindrischen Abschnitts (99) des Hülsenkörpers (25) angreift.

6. Axial durchströmbares Fluidventil nach Anspruch 5,
**dadurch gekennzeichnet, dass**
an der Innenseite des dritten ringförmigen Vorsprungs (94) ein Dichtring (98) für den Anker (28) vorgesehen ist, derart, dass der Dichtring (98) in axialer Richtung durch den Kern (26) und einem radialen inneren Bereich (92) des Ringorgans (77) fixiert ist.

7. Axial durchströmbares Fluidventil nach einem der Ansprüche 1 - 6,
**dadurch gekennzeichnet, dass**
dass innerhalb der Hülse (24) zwischen dem Anker (28) und dem Kern (26) ein Raum (112) vorgesehen ist, der mit Fluid gefüllt ist und in dem eine Druckfeder (38) zur Vorspannung des Ankers (28) gegenüber dem Kern (26) angeordnet ist.

8. Axial durchströmbares Fluidventil nach Anspruch 7,
**dadurch gekennzeichnet, dass**
die Druckfeder (38) das Rohr (48) unmittelbar radial umgibt und im Raum (112) zwischen dem Anker (28) und dem Kern (26) angeordnet ist.

9. Axial durchströmbares Fluidventil nach einem der Ansprüche 1 - 8,
**dadurch gekennzeichnet, dass**
das axial durchströmbare Fluidventil (2) ein Kühlmittelabsperrventil ist.

## Claims

1. Axial flow-through fluid valve comprising
a solenoid (10) having a core (26) and a flow-through armature unit (49), as well as a coil (14) and magnetic return elements (18, 20, 22),
a housing (12) in which the solenoid (10) is arranged,
an inlet nozzle (60) provided at a first axial end of the housing (12),
an outlet nozzle (70) provided at an opposite axial end of the housing (12),
a support surface (57) at an axial end section (54, 56) of the armature unit (49), which cooperates with a valve seat (58),wherein
the housing (12) and the outlet nozzle (70) are formed as an integral injection-molded part,
**characterized in that**
a sleeve for a fluid valve is provided, having a sleeve body (25) that has a first cylindrical section (75) in which at least one core (26) and an armature (28) are arranged as parts of a solenoid (10) to be made, wherein the sleeve body (25) is designed to be open on both sides, wherein a first end (72) of the sleeve body (25) has a constriction (73) with a contiguous second cylindrical section (79), and wherein a second end (96) has a widening (97) with a contiguous third cylindrical section (99), wherein sealing elements (74, 100) are provided on the second and third cylindrical sections (77, 90).

2. Axial flow-through fluid valve according to claim 1, **characterized in that** the sealing elements (74, 100) are formed as O-rings which are provided in press fit on the second and third cylindrical sections (79, 99).

3. Axial flow-through fluid valve according to claim 1 or 2, **characterized in that** the support surface (57) and thus the valve seat (58) are formed on a flow-around body (78).

4. Axial flow-through fluid valve according to one of claims 1 - 3, **characterized in that** the inlet nozzle (62) comprises a first annular projection (64) engaging around an annular element (77), and a second annular projection (62) of the housing (12) with the interposition of a sealing element (66).

5. Axial flow-through fluid valve according to one of claims 1 - 4, **characterized in that** the flow-around body (78) is connected to the annular member (77) through webs (88), wherein the annular member (77) has a third annular projection (94) which, by an outer side, engages an inner side of the of the third cylindrical section (99) of the sleeve body (25).

6. Axial flow-through fluid valve according to claim 5, **characterized in that** a sealing ring (98) for the armature (28) is provided on the inner side of the third annular projection (94) such that the sealing ring (98) is fixed in the axial direction by the core (26) and a radial inner portion (92) of the annular element (72).

7. Axial flow-through fluid valve according to one of claims 1 - 6, **characterized in that** within the sleeve (24), a space (112) is provided between the armature (28) and the core (26), which space is filled with fluid and in which a compression spring (38) is arranged for biasing the armature (28) with respect to the core (26).

8. Axial flow-through fluid valve according to claim 7, **characterized in that** the compression spring (38) directly surrounds the tube (48) radially and is arranged in the space (112) between the armature (28) and the core (26).

9. Axial flow-through fluid valve according to one of claims 1 - 8, **characterized in that** the axial flow-through fluid valve (2) is a coolant shut-off valve.

## Revendications

1. Vanne de fluide pouvant être traversée axialement comportant
un électro-aimant (10) avec un noyau (26) et une unité d'armature (49) pouvant être traversée, ainsi qu'une bobine (14) et des éléments de retour magnétique (18, 20, 22),
un carter (21) dans lequel l'électro-aimant (10) est disposé,
un raccord d'entrée (60) qui est prévu à une première extrémité axiale du carter (12),
un raccord de sortie (72) prévue à une extrémité axiale opposée du carter (12),
une surface d'appui (57) à une section d'extrémité (54, 56) de l'unité d'armature (49), ladite surface coopérant avec un siège de vanne (58),
le carter (12) et le raccord de sortie (70) étant réalisés comme des pièces moulées par injection d'un seul tenant,
**caractérisée en ce qu'**un manchon avec un corps de manchon (25) est prévu, qui comporte une première section (75) cylindrique dans lequel sont disposé au moins un noyau (26) et une armature (26) comme parties d'un électro-aimant (10) à fabriquer, ledit corps de manchon (25) étant ouvert aux deux côtés, une première extrémité (72) du corps de manchon (25) présentant un étranglement (73) avec une deuxième section cylindrique (79) contiguë et une deuxième extrémité présentant une troisième section cylindrique (99) contiguë, des éléments d'étanchéité (74, 100) étant prévus sur le deuxième et la troisième section cylindrique (77, 99).

2. Vanne de fluide pouvant être traversée axialement selon la revendication 1, **caractérisée en ce que** les éléments d'étanchéité (74, 100) sont en forme de joints toriques disposés en ajustement serré sur la deuxième et la troisième section cylindrique (79, 99).

3. Vanne de fluide pouvant être traversée axialement selon la revendication 1 ou 2, **caractérisée en ce que** la surface d'appui (57) et ainsi le siège de soupape (58) sont formés sur un corps d'écoulement (78).

4. Vanne de fluide pouvant être traversée axialement selon l'une des revendications 1 - 3, **caractérisée en ce que** le raccord d'entrée (60) comprend une première saillie (64) annulaire s'engageant autour d'un élément (77) annulaire et une deuxième saillie (62) annulaire du carter (12) avec interposition d'un élément d'étanchéité (66).

5. Vanne de fluide pouvant être traversée axialement selon l'une des revendications 1 - 4, **caractérisée en ce que** le corps d'écoulement (78) est relié à l'élément annulaire (77) via des nervures (88), l'élément annulaire (77) présent une troisième saillie annulaire (94) dont la surface extérieure s'engage sur une surface intérieure de de la troisième section (99) du corps de manchon (25).

6. Vanne de fluide pouvant être traversée axialement selon la revendication 5, **caractérisée en ce qu'**une bague d'étanchéité (98) pour l'armature (28) est prévue sur la face intérieure de la troisième saillie (94), de sorte que la bague d'étanchéité est fixée dans la direction axiale par le noyau (20) et une zone intérieure radiale (92) dudit élément annulaire (77).

7. Vanne de fluide pouvant être traversée axialement selon l'une des revendications 1 - 5, **caractérisée en ce qu'**un espace (112) est prévu dans le manchon (24) entre l'armature (28) et le noyau (26), ledit espace étant rempli de fluide et dans lequel un ressort de compression (38) est disposé pour solliciter l'armature (28) par rapport o noyau (26).

8. Vanne de fluide pouvant être traversée axialement selon la revendication 7, **caractérisée en ce que** le ressort de compression (38) entoure directement le tuyau (48) radialement et est disposé dans l'espace (112) entre l'armature (28) et le noyau (26).

9. Vanne de fluide pouvant être traversée axialement selon l'une des revendications 1 - 8, **caractérisée en ce que** la vanne de fluide (2) pouvant être traversée axialement est une vanne d'arrêt de liquide de refroidissement.
